# EUROPEAN PATENT APPLICATION

(11) **EP 4 746 214 A1**
(43) Date of publication of application: **20.05.2026**
(21) Application number: 24851730.2
(22) Date of filing: 01.08.2024
(51) Int. Cl.: H01R 35/04

(54) **ROTARY CONNECTOR DEVICE**

(30) Priority: 04.08.2023 JP 2023128118; 01.12.2023 JP 2023204049
(71) Applicant: FURUKAWA ELECTRIC CO., LTD., Chiyoda-ku, Tokyo 100-8322 (JP); FURUKAWA AUTOMOTIVE SYSTEMS INC., Shiga 522-0242 (JP)
(72) Inventor: YAMAGOSHI Kenji, Inukami-gun, Shiga 522-0242 (JP); SAOYA Naoshi, Inukami-gun, Shiga 522-0242 (JP); UTSUNOMIYA Hirofumi, Inukami-gun, Shiga 522-0242 (JP)
(74) Representative: Winter, Brandl - Partnerschaft mbB
(86) International application number: PCT/JP2024/027471
(87) International publication number: WO 2025/033305

(57) **Abstract**

Provided is a rotary connector device capable of achieving a reduction in the area secured for the rotary connector device in at least one direction with respect to the rotary shaft of the rotary connector device.

A rotary connector device according to the present invention comprises: a cylindrical fixed body (11); a rotating body (12) rotatably mounted inside the fixed body (11); and at least one flat cable (13a, 13b) that is accommodated in an annular accommodating space (S) between the inner peripheral surface of the fixed body (11) and the outer peripheral surface of the rotating body (12), and that is wound only in one direction around the rotating body 12. In the circumferential direction position of the accommodating space (S), there are a wide portion (region of B1) and a narrow portion (region of A1) between the inner peripheral surface of the fixed body (11) and the outer peripheral surface of the rotating body (12).

## Description

### TECHNICAL FIELD

The present invention relates to a rotary connector device.

### BACKGROUND ART

Conventionally, in the steering equipped to an automobile, it is required to rotate from the neutral position about 2.5 revolutions either clockwise or counter clockwise.

Accompanying this, for the rotary connector device linking between the steering and the vehicle, it is required to rotate from the neutral position about 2.5 revolutions either clockwise or counter clockwise.

However, steer-by-wire, which is a system for controlling the tire angle by electrical signals without mechanically linking the steering and tires, has been given focus in recent years.

In steer-by-wire, the rotation number required in steering is about 0.5 to 0.8 revolutions from the neutral position either clockwise or counter clockwise.

For this reason, contrary to a rotary connector device applied to a system that mechanically links the steering and the tires, a rotary connector device addressing the steering revolution number reduction of steering-by-wire is desired.

For example, Patent Document 1 describes, as an example of a rotary connector device of spiral (helical) type, a relay device mainly including a cylindrical fixed body, a cylindrical rotating body on the inner side of the fixed body, and mounted rotatably, and a flat cable arranged in an annular housing space formed between the fixed body and the rotating body, and wound only in one direction around the rotating body.

In the prior art of spiral type rotary connector devices including Patent Document 1, the annular space (housing space) for moving the flat cable in circles in a housing interior of the rotary connector device is provided at equal distance over the entire circumference.

For this reason, a predetermined region for the rotary connector device must be secured in the entire circumferential direction relative to the rotation axis of the rotary connector device.

### Citation List

### Patent Documents

Patent Document 1: Japanese Unexamined Patent Application, Publication No. H07-169519

### DISCLOSURE OF THE INVENTION

### Problems to be Solved by the Invention

Therefore, the present invention has an object of providing a rotary connector device that can reduce a region secured for the rotary connector device in at least any direction relative to the rotation axis of the rotary connector device.

### Means for Solving the Problems

The above object is achieved by the following aspect of the present invention.

More specifically, a rotary connector device according to an aspect of the present invention includes: a tubular fixed body;
a cylindrical rotating body mounted in a rotatable manner inside of the fixed body; and
at least one flat cable housed in an annular housing space between an inner peripheral surface of the fixed body and an outer peripheral surface of the rotating body, and wound only in one direction around the rotating body, in which
a wide location and a narrow location are included at circumferential direction positions of the housing space between the inner peripheral surface of the fixed body and the outer peripheral surface of the rotating body.

In the above aspect, a shape of the inner peripheral surface of the fixed body is a shape formed by linking respective inner peripheral surfaces of a circular cylindrical portion and an elliptical cylindrical portion, and
between the inner peripheral surface of the fixed body corresponding to the elliptical cylindrical portion and the outer peripheral surface of the rotating body may be narrower than between the inner peripheral surface of the fixed body corresponding to the circular cylindrical portion and the outer peripheral surface of the rotating body.

In the above aspect, a shape of the inner peripheral portion of the fixed body is a shape formed by linking respective inner peripheral surfaces of two circular cylindrical portions of different diameters, and
between the inner peripheral surface of the fixed body corresponding to a circular cylindrical portion having a larger diameter among the two circular cylindrical portions and the outer peripheral surface of the rotating body may be narrower than between the inner peripheral surface of the fixed body corresponding to a circular cylindrical portion having a smaller diameter and the outer peripheral surface of the rotating body.

In the above aspect, a shape of the inner peripheral surface of the fixed body is a circular cylindrical shape, and a position of a central axis of the inner peripheral surface of the fixed body and a position of a rotation axis of the rotating body may be shifted.

### Effects of the Invention

According to the present invention, it is possible to provide a rotary connector device that can reduce a region secured for the rotary connector device in at least any direction relative to the rotation axis of the rotary connector device.

### BRIEF DESCRIPTION OF THE DRAWINGS

FIG. 1 is a schematic cross-sectional view showing a rotary connector device according to an embodiment which is an exemplary mode of the present invention;
FIG. 2 is a schematic cross-sectional view showing an example of a conventional spiral-type rotary connector device;
FIG. 3 is a schematic explanatory drawing showing the shape of the inner peripheral surface of the fixed body and a positional relationship between the fixed body and the rotating body, in the rotary connector device according to Modified Example 1 of the present invention;
FIG. 4 is a schematic explanatory drawing showing the shape of the inner peripheral surface of the fixed body and a positional relationship between the fixed body and the rotating body, in the rotary connector device according to Modified Example 2 of the present invention;
FIG. 5 is a schematic explanatory drawing showing the shape of the inner peripheral surface of the fixed body and a positional relationship between the fixed body and the rotating body, in the rotary connector device according to Modified Example 3 of the present invention;
FIG. 6 is a schematic explanatory drawing showing the shape of the inner peripheral surface of the fixed body and a positional relationship between the fixed body and the rotating body, in the rotary connector device according to Modified Example 4 of the present invention;
FIG. 7 is a schematic explanatory drawing showing the shape of the inner peripheral surface of the fixed body and a positional relationship between the fixed body and the rotating body, in the rotary connector device according to Modified Example 5 of the present invention;
FIG. 8 is a schematic explanatory drawing showing the shape of the inner peripheral surface of the fixed body and a positional relationship between the fixed body and the rotating body, in the rotary connector device according to Modified Example 6 of the present invention;
FIG. 9 is a schematic explanatory drawing showing the shape of the inner peripheral surface of the fixed body and a positional relationship between the fixed body and the rotating body, in the rotary connector device according to Modified Example 7 of the present invention;
FIG. 10 is a schematic explanatory drawing showing the shape of the inner peripheral surface of the fixed body and a positional relationship between the fixed body and the rotating body, in the rotary connector device according to Modified Example 8 of the present invention; and
FIG. 11 is a schematic explanatory drawing showing the shape of the inner peripheral surface of the fixed body and a positional relationship between the fixed body and the rotating body, in the rotary connector device according to Modified Example 9 of the present invention.

### PREFERRED MODE FOR CARRYING OUT THE INVENTION

Hereinafter, a rotary connector device according to an embodiment which is an exemplary mode of the present invention will be specifically described while referencing the drawings.

### (Embodiments)

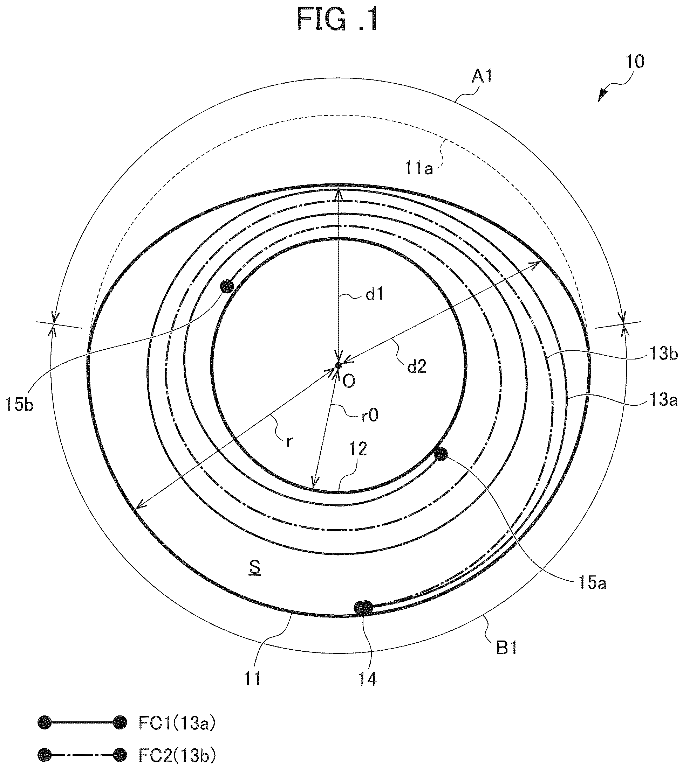

FIG. 1 is a schematic cross-sectional view showing a rotary connector device 10 according to an embodiment.
FIG. 1 is a cross-sectional view related to a cross section in a direction perpendicular to the rotation axis of the rotary connector device 10, in which a shape from viewing a fixed body 11 described later in a plane becomes apparent.
The rotary connector device 10 according to the present embodiment is of spiral type.

As shown in FIG. 1, the rotary connector device 10 according to the present embodiment includes the fixed body 11, a rotating body 12, and two flat cables 13a and 13b (specifically, a first flat cable (FC1) 13a and a second flat cable (FC2) 13b).

It should be noted that for the fixed body 11, mainly the shape of the inner peripheral surface of a tubular member becomes apparent in FIG. 1.

Although the outer peripheral surface of the fixed body 11 is a shape resembling the inner peripheral surface, there may be slight unevenness, protrusion of parts, a base belonging to a cylindrical member, attached parts to other members such as the vehicle body.

Hereinafter, in the case of simply referring to "fixed body 11" in terms of shape, it shall indicate the shape of the inner peripheral surface of the tubular member unless otherwise specified.

In addition, for the rotating body 12, mainly the shape of the outer peripheral surface of a circular cylindrical member becomes apparent in FIG. 1.

In the rotating body 12, there may be attachment parts to other members such as a bearing belonging to a tubular member, a steering shaft, or the like.

Hereinafter, in the case of simply referring to the "rotating body 12" in terms of shape, it shall indicate the shape of the outer peripheral surface of a tubular member unless otherwise specified.

The rotary connector device 10 is a device equipped to an automobile, and electrically connects electronic equipment provided to the side of the fixed body 11 with electronic equipment provided to the side of the rotating body 12.

The fixed body 11 is fixed on a vehicle body side, and does not rotate with rotation of the steering (not shown).

On the other hand, the rotating body 12 rotates according to rotation of the steering (not shown).

The steering is equipped in a rotatable manner to the vehicle (not shown).

In the fixed body 11, the shape of the inner peripheral surface is a shape made by connecting the inner peripheral surfaces of a circular cylindrical portion and an elliptical cylindrical portion, and is a substantially circular cylindrical shape as a whole.

In a plan view of the fixed body 11, in a partial region A1 of the circumferential direction, distances d1 and d2 from the center O of a circular arc are shorter than a radius r of the circle 11a establishing another region B1 as the circular arc.

In other words, in a plan view, the fixed body 11 is a shape in which the area of the region A1 is cut out relative to the perfect circle (circle 11a).

In other words, in the fixed body 11, the area of the region A1 is the shape of an elliptical cylindrical portion, and the area of the region B1 is the shape of a circular cylindrical portion.

It should be noted that, in the present disclosure, the term of "substantially circular cylindrical shape" indicates a concept encompassing all shapes in which a region other than a partial region in the circumferential direction makes a circular cylindrical shape.

The rotating body 12 is a circular cylindrical body which is mounted in a rotatable manner inside of the fixed body 11, in a concentric circle with the circle 11a including the circular arc of the other region B1.

Between the inner peripheral surface of the fixed body 11 and the outer peripheral surface of the rotating body 12, an annular housing space S is formed.

At a circumferential direction position of the housing space S, compared to between the inner peripheral surface of the fixed body 11 and the outer peripheral surface of the rotating body 12 in the region B1 corresponding to the circular cylindrical portion (r-r0), between the inner peripheral surface of the fixed body 11 and the outer peripheral surface of the rotating body 12 in the region A1 corresponding to the elliptical cylindrical portion (d1-r0, d2-r0) is narrower (r0 represents the radius of the rotating body 12).

The steering shaft (not shown) coupled to the steering (not shown) is provided in an inserted manner at the inner side of the rotating body 12.

In response to rotation of the steering, the steering shaft rotates around the rotation axis X, and in response to rotation of the steering shaft, the rotating body 12 rotates around a center point O relative to the fixed body 11.

The rotating body 12 rotates about 0.5 to 0.8 revolutions from the neutral position either clockwise or counter clockwise.

Even when the steering shaft rotates, the fixed body 11 does not rotate.

The flat cables 13a, 13b are accommodated in the housing space S, and are wound around the rotating body 12 to link between the fixed body 11 and the rotating body 12.

The flat cables 13a, 13b are wound only in one direction (clockwise in FIG. 1) around the rotating body 12.

It should be noted that, when describing the direction in which the flat cables are wound or the like, the advancing direction from the connection part on the rotating body side to the connection part on the fixed body side is defined as the basis (same applies to descriptions later).

Within the annular housing space S, the one flat cable 13a is wound a little over 2 times, and the second flat cable 13b is wound a little over 1 time.

End portions on the outer circumferential side (fixed body 11 side) of the flat cables 13a, 13b are connected to the fixed body 11 at the same fixed body connection portion 14.

On the other hand, the end portions on the inner circumferential side (rotating body 12 side) of the first flat cable 13a and the second flat cable 13b are respectively connected to the rotating body 12 by rotating body connection portions 15a, 15b which are separated by 180 degrees in the circumferential direction.

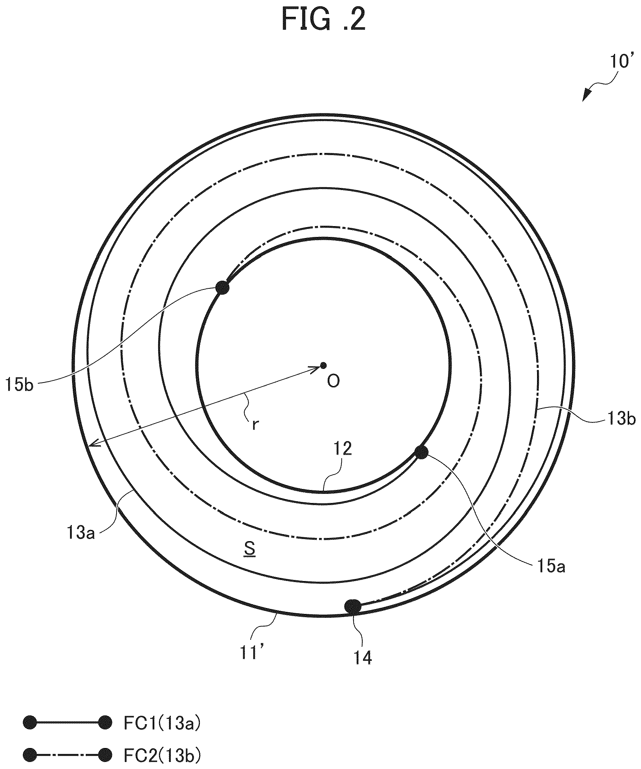

It should be noted that, actually, both ends of the flat cables 13a, 13b are connected to a connector (not shown); however, FIG. 1 represents the connection portion schematically as the fixed body connection portion 14 and the rotating body connection portion 15 (same applies to FIG. 2).

FIG. 2 shows an example of a conventional spiral-type rotary connector device 10' in a schematic cross-sectional view.

It should be noted that, in FIG. 2, the same reference symbols as in FIG. 1 are attached to configurations and members having functions which are the same as for the rotary connector device 10 according to the present embodiment, and detailed descriptions thereof will be omitted.

The rotary connector device 10' according to the conventional example differs in the shape of a fixed body 11' from the rotary connector device 10 according to the present embodiment.

In other words, in the rotary connector device 10', as shown in FIG. 2, the shape of the fixed body 11' is circular in a plan view, and the housing space S is the same width in all directions in 360 degrees in a doughnut shape.

For this reason, around the instrument panel of an automobile, particularly in the vicinity of the steering wheel, for example, a predetermined region for mounting the rotary connector device 10' must be secured around the entire circumference relative to the rotation axis O of the rotary connector device 10'.

However, with the rotary connector device 10 according to the present embodiment, as shown in FIG. 1, the shape of the fixed body 11 is a shape in which the area of a region A1 is cut out relative to the circle 11a.

In other words, with the rotary connector device 10 according to the present embodiment, at circumferential direction positions of the housing space S, between the inner peripheral surface of the fixed body 11 and the outer peripheral surface of the rotating body 12, there is a wide location (region B1) and a narrow location (region A1, particularly the narrowest position through which the arrow d1 which is the center thereof passes.

For this reason, the housing space S becomes narrower in the area of the region A1, and it is possible to reduce the region secured for attaching the rotary connector device 10 by this much.

For example, when mounting the steering to the vehicle so that the area of the region A1 is at the top of the rotary connector device 10, it is possible to arrange other devices such as a monitor, various equipment and the like to a region cut out at the inner side of the circle 11a.

In the rotary connector device 10 according to the present embodiment, the housing space S becomes narrow in the area of the region A1, and there is little margin upon the flat cables 13a, 13b passing through this narrowed location moving together with rotation of the steering.

However, as in the present embodiment, in the case of rotation of the rotating body 12 being little at less than 1 revolution in both rotation directions from the neutral position, since the movement in the housing space S of the flat cables 13a, 13b is also small, a failure is unlikely to occur even if the flat cables 13a, 13b pass through the narrowed location of the housing space S.

In the rotary connector device 10 according to the present embodiment, the shape of the fixed body 11, particularly the inner surface, in the area of the region A1 is a curved shape without steps.

The flat cables 13a, 13b move together with rotation of the steering, and even assuming that the flat cables 13a, 13b passing through the narrowed location come into contact with the inner surface of the fixed body 11, there is little load on the flat cables 13a, 13b.

With the rotary connector device 10 according to the present embodiment, in a cross section in a direction perpendicular to the rotation axis O of the rotating body 12 (cross section shown in FIG. 1), the circumference of the inner peripheral surface of the fixed body 11 is at least the circumference of the outermost periphery of the flat cables 13a and 13b in a state where the winding is the loosest (state fully turning the steering clockwise in FIG. 1).

The "outermost periphery of flat cables 13a and 13b" referred to herein indicates a ring formed in a state in which the tip end of the first winding of the outermost flat cable (flat cable 13a in present embodiment) in this wound state makes contact with the next inwards (rotation axis O side) flat cable (tip end of second winding of flat cable 13a in present embodiment; may also be another flat cable depending on the winding method).

In the present embodiment, although the housing space S becomes narrower in the area of region A1, since the circumference of the inner peripheral surface of the fixed body 10 is at least the circumference of the outermost periphery of the flat cables 13a and 13b in the state where the winding is the loosest, regardless of how the steering is turned, the load on the flat cables 13a and 13b fit into the housing space S is suppressed.

It should be noted that recesses and corners in which the flat cable does not fit are not included in the "inner peripheral surface" upon calculating the "circumference of inner peripheral surface of the fixed body", and the track where the flat cables can exist is defined as the "inner peripheral surface".

The embodiment described above merely illustrates an example of a representative mode of the present invention, and the present invention is not to be limited to this embodiment.

For example, in the above embodiment, an example providing two flat cables is given; however, the present invention is not to be limited thereto, and the number of flat cables may be only one, or three or more.

In addition, in the above embodiment, the shape of the inner peripheral surface of the fixed body 11 is a shape linking the inner peripheral surfaces of each of the circular cylindrical portion and the elliptical cylindrical portion; however, it may be a shape linking the inner peripheral surfaces of two circular cylindrical portions of different diameter.

In this case, it is sufficient if replacing the region A1 of the inner peripheral surface of the elliptical cylindrical portion in the above-mentioned embodiment with the inner peripheral surface of a circular cylindrical portion having a large diameter, and establishing a shape linking this with a region B1 which is the inner peripheral surface of a circular cylindrical portion of small diameter.

In this case, compared to between the outer peripheral surface of the rotating body and the inner peripheral surface of the fixed body corresponding to the circular cylindrical portion (region B1) of small diameter among the two circular cylindrical portions, between the outer peripheral surface of the rotating body and the inner peripheral surface of the fixed body corresponding to the circular cylindrical portion of large diameter (region A1 where the elliptical cylindrical portion has been replaced with the circular cylindrical portion) is narrower.

Even if the shape of the inner peripheral surface of the fixed body is a shape linking the inner peripheral surfaces of the two circular cylindrical portions of different diameters, an action or effect similar to the above embodiment which is a shape linking the inner peripheral surfaces of each of the circular cylindrical portion and the elliptical cylindrical portion is exerted.

It should be noted that the linking portion between inner peripheral surfaces of the two circular cylindrical portions of different diameters, or the linking portion between inner peripheral surfaces of the circular cylindrical portion and elliptical cylindrical portion smoothly link with a curved line in the above embodiment which is the latter example; however, it is not a problem even if there are steps, angles or the like.

Naturally, in order to suppress the load on the flat cables housed therein, it is preferable for the inner peripheral surface to be smooth over the entire circumference.

Furthermore, as the shape of the inner peripheral surface of the fixed body, it is possible to adopt various shapes other than the shape linking the inner peripheral surfaces of the circular cylindrical portion and the elliptical cylindrical portion, and the shape linking the inner peripheral surfaces of the two circular cylindrical portions of different diameters.

At circumferential direction positions of the annular housing space between the inner peripheral surface of the fixed body and the outer peripheral surface of the rotating body, between the inner peripheral surface of the fixed body and the outer peripheral surface of the rotating body may be a shape having wide locations and narrow locations.

So long as between the inner peripheral surface of the fixed body and the outer peripheral surface of the rotating body is a shape having wide locations and narrow locations, it is possible to secure space to arrange other members of the vehicle, equipment, etc. outside of the fixed body abutting the narrow location.

At this time, in the cross section (plan view) in a direction perpendicular to the rotation axis of the rotating body, it is preferable to secure the size of the inner circumference of the fixed body so that the circumference of the inner peripheral surface of the fixed body is at least the circumference of the outermost periphery of the flat cable in a state where the winding is the loosest.

So long as the circumference of the inner peripheral surface of the fixed body is at least the circumference of the outermost periphery of the flat cable in a state where the winding is the loosest, the load on the flat cable housed in the housing space is suppressed no matter how the rotating body is rotated.

Hereinafter, modified examples which are other modes of the present invention having different shapes for the inner peripheral surface of the fixed body will be listed.

In the following modified examples, only the inner peripheral surface of the fixed body and the outer peripheral surface of the rotating body are illustrated, and the shape of the inner peripheral surface of the fixed body and the positional relationship between the fixed body and the rotating body will be described.

As a matter of course, the annular housing space S is formed between the inner peripheral surface of the fixed body and the outer peripheral surface of the rotating body, and at least one flat cable (not shown) wound only in one direction around the rotating body is housed in this housing space S.

It should be noted that the circumference of the inner peripheral surface of the fixed body is preferably at least the circumference of the outermost periphery of the flat cable in a state where the winding is the loosest also in any of the following modified examples.

### Modified Example 1

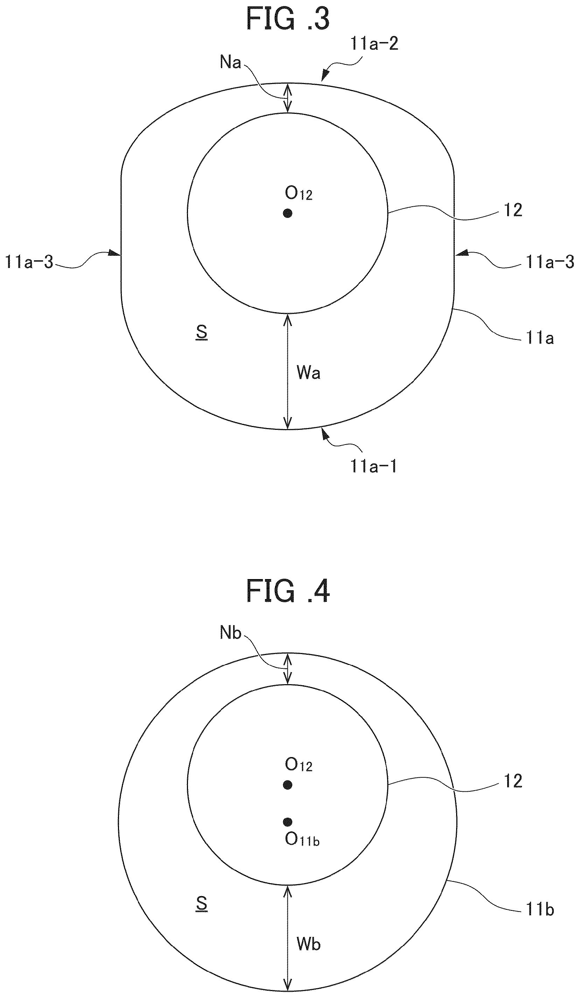

FIG. 3 is a schematic explanatory drawing showing the shape of the inner peripheral surface of the fixed body 11a and the positional relationship between the fixed body 11a and the rotating body 12, in a rotary connector device according to Modified Example 1.

FIG. 3 is a cross-sectional view according to a cross section in a direction perpendicular to a rotation axis O₁₂ of the rotating body 12, in which the shape from viewing the fixed body 11a and the rotating body 12 in a plane becomes apparent.

In the fixed body 11a of Modified Example 1, the shape of the inner peripheral surface consists of a circular cylindrical portion 11a-1 which is a shape cutting out a portion of a predetermined central angle from the entire circumference of the cylinder, an elliptical cylindrical portion 11a-2 which is a shape cutting out a portion of a predetermined central angle from the entire circumference of the elliptical cylinder, and a pair of flat-plate portions 11a-3 linking the ends of both of these portions.

In the present modified example, in circumferential direction positions of the housing space S, between the inner peripheral surface of the fixed body 11a and the outer peripheral surface of the rotating body 12 in a region corresponding to the circular cylindrical portion 11a-1 becomes wider (widest location is arrow Wa portion), and between the inner peripheral surface of the fixed body 11a and the outer peripheral surface of the rotating body 12 in a region corresponding to the elliptical cylindrical portion 11a-2 becomes narrower (narrowest location is arrow Na portion).

According to the present modified example, it is possible to secure a space to arrange other members of the vehicle, equipment, etc. outside of the fixed body 11a of the elliptical cylindrical portion 11a-2 abutting the narrow location.

### Modified Example 2

FIG. 4 is a schematic explanatory drawing showing the shape of the inner peripheral surface of the fixed body 11b and the positional relationship between the fixed body 11b and the rotating body 12, in a rotary connector device according to Modified Example 2.

FIG. 4 is a cross-sectional view according to a cross section in a direction perpendicular to a rotation axis O₁₂ of the rotating body 12, in which the shape from viewing the fixed body 11b and the rotating body 12 in a plane becomes apparent.

In the fixed body 11b of Modified Example 2, the shape of the inner peripheral surface is a circular cylinder similarly to the rotating body 12; however, the position of the central axis O_{11b} of the inner peripheral surface of the fixed body 11b and the position of the rotation axis O₁₂ of the rotating body 12 are shifted.

For this reason, in the present modified example, at the circumferential direction positions of the housing space S, between the inner peripheral surface of the fixed body 11b and the outer peripheral surface of the rotating body 12, a wide location (widest location is arrow Wb portion) and a narrow location (narrowest location is arrow Nb portion) are produced.

According to the present modified example, it is possible to secure a space to arrange other members of the vehicle, equipment, etc. outside of the fixed body 11b in the vicinity of the arrow Nb portion abutting the narrow location

### Modified Example 3

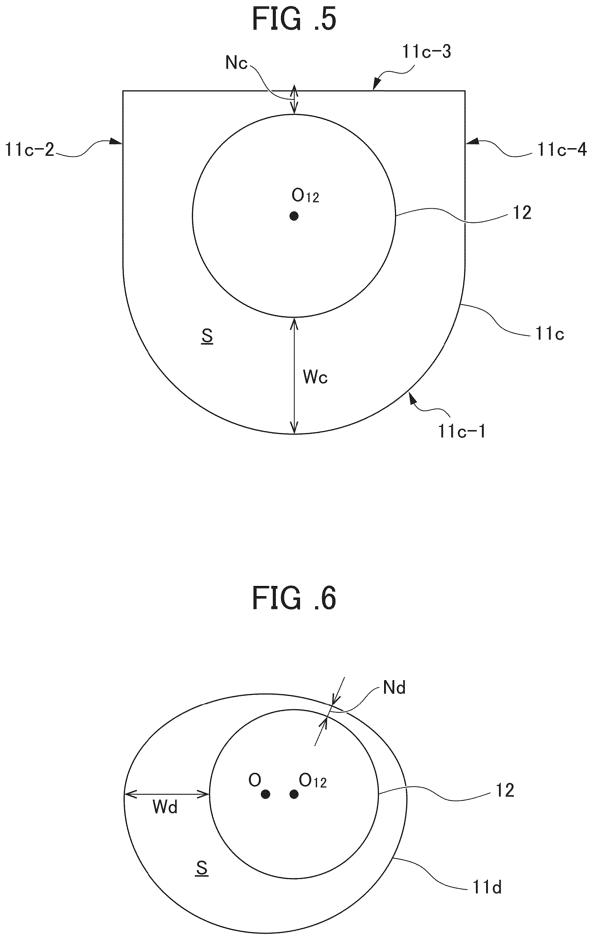

FIG. 5 is a schematic explanatory drawing showing the shape of the inner peripheral surface of the fixed body 11c and the positional relationship between the fixed body 11c and the rotating body 12, in a rotary connector device according to Modified Example 3.

FIG. 5 is a cross-sectional view according to a cross section in a direction perpendicular to a rotation axis O₁₂ of the rotating body 12, in which the shape from viewing the fixed body 11c and the rotating body 12 in a plane becomes apparent.

In the fixed body 11c of Modified Example 3, the shape of the inner peripheral surface consists of a circular cylindrical portion 11c-1, and portions 11c-2, 11c-3 and 11c-4 corresponding to three lateral surfaces among the four lateral surface which can form a rectangular parallelepiped.

In the present modified example, at circumferential direction positions of the housing space S, between the inner peripheral surface of the fixed body 11c and the outer peripheral surface of the rotating body 12 in a region corresponding to the circular cylindrical portion 11c-1 becomes wide (widest location is arrow Wc portion), and between the inner peripheral surface of the fixed body 11c and the outer peripheral surface of the rotating body 12 in a region corresponding to the portion 11c-2 becomes narrow (narrowest location is arrow Nc portion, which is the center of the region corresponding to portion 11c-2).

According to the present modified example, it is possible to secure a space to arrange other members of the vehicle, equipment, etc. outside of the fixed body 11c of the portion 11c-2 abutting the narrow location.

### Modified Example 4

FIG. 6 is a schematic explanatory drawing showing the shape of the inner peripheral surface of the fixed body 11d and the positional relationship between the fixed body 11d and the rotating body 12, in a rotary connector device according to Modified Example 4.

FIG. 6 is a cross-sectional view according to a cross section in a direction perpendicular to a rotation axis O₁₂ of the rotating body 12, in which the shape from viewing the fixed body 11d and the rotating body 12 in a plane becomes apparent.

The fixed body 11d of Modified Example 4 is the same shape as the fixed body 11 of the above embodiment described using FIG. 1; however, the position of the rotation axis of the rotating body 12 is shifted from the position of reference symbol O in the above embodiment to the position of reference symbol O₁₂ on the upper right side of the drawing.

In this way, the present invention is not necessarily a symmetrical form as a whole.

In the present modified example, at circumferential direction positions of the housing space S, between the inner peripheral surface of the fixed body 11d and the outer peripheral surface of the rotating body 12 in a region on the upper left side of the drawing becomes wide (widest location is arrow Wd portion), and between the inner peripheral surface of the fixed body 11d and the outer peripheral surface of the rotating body 12 in a region somewhat to the upper right side in the drawing becomes narrow (narrowest location is arrow Nd portion).

According to the present embodiment, it is possible to secure a space to arrange other members of the vehicle, equipment, etc. outside of the fixed body 11d at the arrow Nd portion abutting the narrow location.

### Modified Example 5

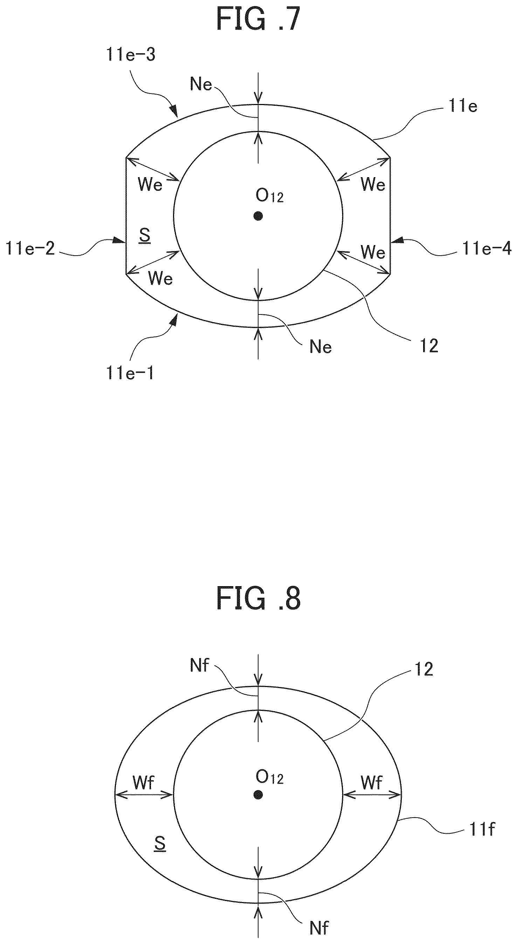

FIG. 7 is a schematic explanatory drawing showing the shape of the inner peripheral surface of the fixed body 11e and the positional relationship between the fixed body 11e and the rotating body 12, in a rotary connector device according to Modified Example 5.

FIG. 7 is a cross-sectional view according to a cross section in a direction perpendicular to a rotation axis O₁₂ of the rotating body 12, in which the shape from viewing the fixed body 11e and the rotating body 12 in a plane becomes apparent.

In the fixed body 11e of Modified Example 5, the shape of the inner peripheral surface consists of a pair of circular cylindrical portions 11e-1 and 11e-3, and a pair of flat-plate portions 11e-2 and 11e-4 linking both ends thereof.

In the present modified example, at a circumferential direction position of the housing space S, between the inner peripheral surface of the fixed body 11e at the portions linking the pair of circular cylindrical portions 11e-1 and 11e-3 with the pair of flat-plate portions 11e-2 and 11e-4, and the outer peripheral surface of the rotating body 12 becomes the widest (arrow We portions), and between the inner peripheral surface of the fixed body 11e in the vicinity of the middle of each region corresponding to the pair of circular cylindrical portions 11e-1 and 11e-3 and the outer peripheral surface of the rotating body 12 becomes narrow (narrowest locations are arrow Ne portions, which are the middle of each region corresponding to the pair of circular cylindrical portions 11e-1 and 11e-3).

According to the present modified example, it is possible to secure a space to arrange other members of the vehicle, equipment, etc. outside (2 locations) of the fixed body 11e in the vicinity of the middle of each region corresponding to the portions 11e-1 and 11e-3 abutting the narrow locations.

### Modified Example 6

FIG. 8 is a schematic explanatory drawing showing the shape of the inner peripheral surface of the fixed body 11f and the positional relationship between the fixed body 11f and the rotating body 12, in a rotary connector device according to Modified Example 6.

FIG. 8 is a cross-sectional view according to a cross section in a direction perpendicular to a rotation axis O₁₂ of the rotating body 12, in which the shape from viewing the fixed body 11f and the rotating body 12 in a plane becomes apparent.

In the fixed body 11f of Modified Example 6, the shape of the inner peripheral surface is an elliptical cylindrical shape, and the position of the central axis of the inner peripheral surface of the fixed body 11f and the position of the rotation axis of the rotating body 12 coincide (both reference symbol O₁₂).

Therefore, the vicinities of both ends of the major axis of the inner peripheral surface of the fixed body 11f are far from the outer periphery of the rotating body 12, and the vicinities of both ends of the minor axis are close to the outer periphery of the rotating body 12.

For this reason, in the present modified example, at circumferential direction positions of the housing space S, between the inner peripheral surface of the fixed body 11f and the outer peripheral surface of the rotating body 12 produces wide locations abutting the vicinities of both ends of the major axis of the inner peripheral surface of the fixed body 11f (widest locations are arrow Wf portions, two locations), and narrow locations abutting the vicinities of both ends of the minor axis thereof (narrowest locations are arrow Nf portions, 2 locations).

According to the present embodiment, it is possible to secure a space to arrange other members of the vehicle, equipment, etc. outside of the fixed body 11f at the arrow Nf portion abutting the narrow location.

### Modified Example 7

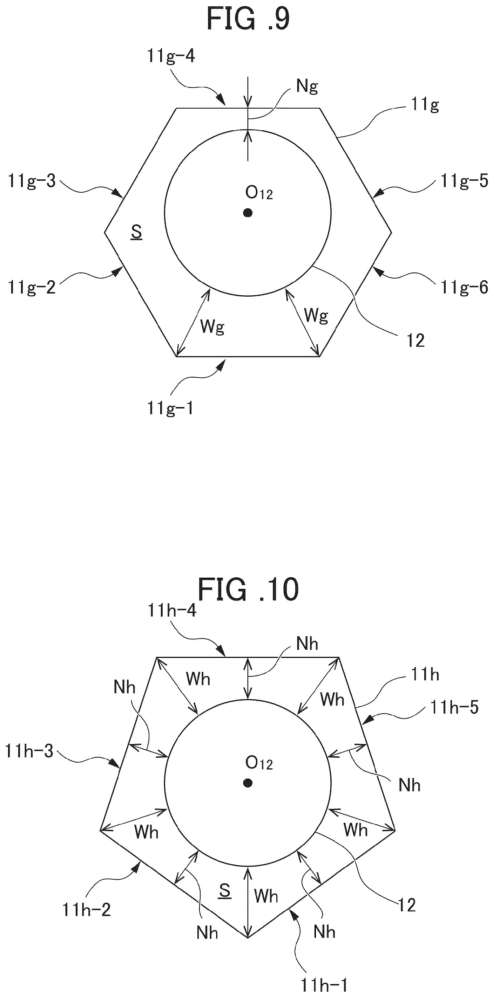

FIG. 9 is a schematic explanatory drawing showing the shape of the inner peripheral surface of the fixed body 11g and the positional relationship between the fixed body 11g and the rotating body 12, in a rotary connector device according to Modified Example 7.

FIG. 9 is a cross-sectional view according to a cross section in a direction perpendicular to a rotation axis O₁₂ of the rotating body 12, in which the shape from viewing the fixed body 11g and the rotating body 12 in a plane becomes apparent.

In the fixed body 11g of Modified Example 7, the shape of the inner peripheral surface is a regular hexanol shape, and consists of the six sides 11g-1 to 11g-6.

The rotating body 12 is biased to the side 11g-4 (upper part of drawing) from the center of the fixed body 11g.

For this reason, in the present modified example, at circumferential direction positions of the housing space S, between the region of the side 11g-1 of the inner peripheral surface of the fixed body 11g and the outer circumferential surface of the rotating body 12 becomes wide (widest locations are arrow Wg portions on both ends of side 11g-1, 2 locations), and between the region of the side 11g-4 of the inner peripheral surface of the fixed body 11g and the outer peripheral surface of the rotating body 12 becomes narrow (narrowest location is arrow Ng portion at center of side 11g-4).

According to the present embodiment, it is possible to secure a space to arrange other members of the vehicle, equipment, etc. outside of the fixed body 11g of the side 11g-4 abutting the narrow location.

### Modified Example 8

FIG. 10 is a schematic explanatory drawing showing the shape of the inner peripheral surface of the fixed body 11h and the positional relationship between the fixed body 11h and the rotating body 12, in a rotary connector device according to Modified Example 8.

FIG. 10 is a cross-sectional view according to a cross section in a direction perpendicular to a rotation axis O₁₂ of the rotating body 12, in which the shape from viewing the fixed body 11h and the rotating body 12 in a plane becomes apparent.

In the fixed body 11h of Modified Example 8, the shape of the inner peripheral surface a regular pentagonal shape consisting of the five sides 11h-1 to 11h-5, in which the position of the central axis of the inner peripheral surface of the fixed body 11h and the position of the rotation axis of the rotating body 12 coincide (both reference symbol O₁₂).

In a plan view, the distance between the fixed body 11h of the regular polygon and the circular rotating body 12 in the state with centers coinciding varies widely in the circumferential direction.

For this reason, in the present modified example, at circumferential direction positions of the housing space S, between the inner peripheral surface of the fixed body 11h and the outer peripheral surface of the rotating body 12 produces the widest locations (arrow Wh portions, 5 locations) at the five vertices of the inner peripheral surface of the fixed body 11h, and narrow locations at regions between these vertices (narrowest locations are arrow Nh portions in middle of each side 11h-1 to 11h-5, five locations).

According to the present modified example, it is possible to secure a space to arrange other members of the vehicle, equipment, etc. outside of the fixed body 11h in the periphery of the arrow Nh portions abutting the narrow locations.

### Modified Example 9

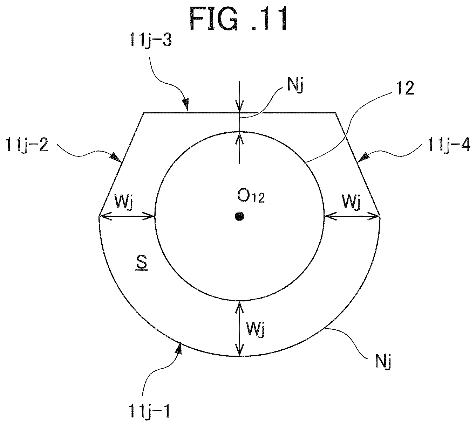

FIG. 11 is a schematic explanatory drawing showing the shape of the inner peripheral surface of the fixed body 11j and the positional relationship between the fixed body 11j and the rotating body 12, in a rotary connector device according to Modified Example 9.

FIG. 11 is a cross-sectional view according to a cross section in a direction perpendicular to a rotation axis O₁₂ of the rotating body 12, in which the shape from viewing the fixed body 11j and the rotating body 12 in a plane becomes apparent.

In the fixed body 11j of Modified Example 9, the shape of the inner peripheral surface consists of the circular cylindrical portion 11j-1, and three flat portions 11j-2, 11j-3 and 11j-4 continuous in order to link both ends of this.

The position of the central axis of the inner peripheral surface of the circular cylindrical portion 11j-1 of the fixed body 11j and the position of the rotation axis of the rotating body 12 coincide (both reference symbol O₁₂).

In addition, in a plan view, among the three flat portions, the middle portion 11j-3 is the longest, portions 11j-2 and 11j-4 are the same length, and the angles formed with the portion 11j-3 are equal obtuse angles.

The fixed body 11j and the rotating body 12 of Modified Example 9 make a left/right line symmetric figure in the drawing, based on the straight line passing through the origin O₁₂.

In the present modified example, at circumferential direction positions of the housing space S, between the inner peripheral surface of the fixed body 11j in a region corresponding to the circular cylindrical portion 11a-1 and the outer peripheral surface of the rotating body 12 is constant, wide location (arrow Wj portion), and between the region of the side 11j-3 of the inner peripheral surface of the fixed body 11j and the outer peripheral surface of the rotating body 12 is a narrow location (narrowest location is arrow Nj portion in middle of side 11j-3).

According to the present modified example, it is possible to secure a space to arrange other members of the vehicle, equipment, etc. outside of the fixed body 11j of the portion 11j-3 abutting the narrow location.

The above modified examples are ultimately just illustrations, and the shape of the inner peripheral surface of the fixed body, and the positional relationship between the fixed body and the rotating body are not limited to the configurations of the above-mentioned embodiments and modified examples.

For example, although examples of a regular pentagon and regular hexagon are given in the above modified examples 7 and 8, there may be another polygonal shape, or a regular polygonal shape.

Additionally, it may be a fixed body having an inner peripheral surface of any shape such as non-asymmetric shapes and irregular shapes.

Additionally, a person skilled in the art following the conventional common knowledge could can conduct various modifications in a scope not departing from the gist of the present invention.

Even with such modifications, so long as providing the configuration of the rotary connector device of the present invention, these modifications are naturally also included in the category of the present invention.

### EXPLANATION OF REFERENCE NUMERALS

10, 10': rotary connector device
11, 11', 11a, 11b, 11c, 11d, 11e, 11f, 11g, 11h, 11j: fixed body
12: rotating body
13a, 13b: flat cable (FC1 ~ 3)

## Claims

1. A rotary connector device comprising:
a tubular fixed body;
a cylindrical rotating body mounted in a rotatable manner inside of the fixed body; and
at least one flat cable housed in an annular housing space between an inner peripheral surface of the fixed body and an outer peripheral surface of the rotating body, and wound only in one direction around the rotating body,
wherein a wide location and a narrow location are included at circumferential direction positions of the housing space between the inner peripheral surface of the fixed body and the outer peripheral surface of the rotating body.

2. The rotary connector device according to claim 1, wherein a shape of the inner peripheral surface of the fixed body is a shape formed by linking respective inner peripheral surfaces of a circular cylindrical portion and an elliptical cylindrical portion, and
wherein between the inner peripheral surface of the fixed body corresponding to the elliptical cylindrical portion and the outer peripheral surface of the rotating body is narrower than between the inner peripheral surface of the fixed body corresponding to the circular cylindrical portion and the outer peripheral surface of the rotating body.

3. The rotary connector device according to claim 1, wherein a shape of the inner peripheral portion of the fixed body is a shape formed by linking respective inner peripheral surfaces of two circular cylindrical portions of different diameters, and
wherein between the inner peripheral surface of the fixed body corresponding to a circular cylindrical portion having a larger diameter among the two circular cylindrical portions and the outer peripheral surface of the rotating body is narrower than between the inner peripheral surface of the fixed body corresponding to a circular cylindrical portion having a smaller diameter and the outer peripheral surface of the rotating body.

4. The rotary connector device according to claim 1, wherein a shape of the inner peripheral surface of the fixed body is a circular cylindrical shape, and a position of a central axis of the inner peripheral surface of the fixed body and a position of a rotation axis of the rotating body are shifted.
